# EUROPEAN PATENT SPECIFICATION

(11) **EP 4 585 522 B1**
(45) Date of publication and mention of the grant of the patent: **07.10.2026**
(21) Application number: 25151055.8
(22) Date of filing: 09.01.2025
(51) Int. Cl.: B64G 1/60, B64G 7/00

(54) **NEUTRAL BUOYANCY SOLID WASTE CAPTURE TEST METHOD**
TESTVERFAHREN ZUR ERFASSUNG VON FESTEM ABFALL MIT NEUTRALEM AUFTRIEB
PROCÉDÉ DE TEST DE CAPTURE DE DÉCHETS SOLIDES À FLOTTABILITÉ NEUTRE

(30) Priority: 09.01.2024 US 202418408319
(43) Date of publication of application: 16.07.2025
(73) Proprietor: Hamilton Sundstrand Space Systems International, Inc., Windsor Locks, CT 06096 (US)
(72) Inventor: HIMMELMANN SCHUSTER, Ashley Rose, Chicago, 60606 (US); HOANG, Thao, Arlington, 98223 (US); MONSON, Timothy, Winnebago, 61088 (US)
(74) Representative: Dehns

(56) References cited:
- MCKINLEY MELISSA ET AL: "NASA Alternate Fecal Canister Development and Design for Exploration Missions", 2023 IEEE AEROSPACE CONFERENCE, IEEE, 4 March 2023 (2023-03-04), pages 1 - 11, XP034341971, DOI: 10.1109/AERO55745.2023.10115832
- AUTREY DAVID E ET AL: "Development of the Universal Waste Management System", 16 July 2020 (2020-07-16), XP093231081, Retrieved from the Internet <URL:https://ttu-ir.tdl.org/server/api/core/bitstreams/031cabaf-bb07-4aa6-8a36-0a98df182f5e/content>
- PAYRA SYAMANTAK ET AL: "Artemis Removable-Canister Waste Accumulation System & Handler (ARC-WASH): A Portable Modular Space Lavatory", 2022 IEEE AEROSPACE CONFERENCE (AERO), IEEE, 5 March 2022 (2022-03-05), pages 1 - 12, XP034164327, DOI: 10.1109/AERO53065.2022.9843484

## Description

### BACKGROUND

The present invention relates to space toilets and, more particularly, to a neutral buoyancy solid waste capture test method for space toilets.

The International Space Station (ISS) is the largest modular space station in low Earth orbit. The station serves as a microgravity and space environment research laboratory in which scientific research is conducted in astrobiology, astronomy, meteorology, physics and other fields. The ISS is suited for testing spacecraft systems and equipment required for possible future long-duration missions to the Moon and Mars. The ISS is further suited for habitation by humans for prolonged durations and involves the use of multiple life support systems.

Accordingly, there remains a need for improved life support systems on the ISS as well as on spacecraft.

MCKINLEY MELISSA ET AL: "NASA Alternate Fecal Canister Development and Design for Exploration Missions",2023 IEEE AEROSPACE CONFERENCE, IEEE, 4 March 2023 (2023-03-04), pages 1-11, discloses, according to its abstract, earth based testing during development of a collapsible canister for the collection and containment of fecal deposits on long range exploration missions as well as on space stations where mass and volume are of great impact on spacecraft and propulsion designs.

### BRIEF DESCRIPTION

According to an aspect of the invention, a commode test system for use in Earth's gravity field at Earth's surface is provided. The commode test system includes a commode disposed at Earth's surface, a blower to generate airflow into the commode, a gas-filled bolus having a neutral buoyancy in Earth's gravity field at Earth's surface and recording devices to record movements of the gas-filled bolus in the airflow relative to the commode.

In embodiments, the gas-filled bolus includes an inflatable material and gas that inflates the inflatable material.

In embodiments, the inflatable material is provided as a balloon and the gas includes helium.

In embodiments, the gas-filled bolus further includes a coating to mimic a texture of a fecal deposit.

In embodiments, the gas-filled bolus is configured to mimic one or more predefined types of fecal deposits.

In embodiments, an injection apparatus injects the gas-filled bolus into the airflow.

In embodiments, the injection apparatus has a variable injection velocity for injecting the gas-filled bolus into the airflow.

In embodiments, the injection apparatus has a human body geometry.

According to an aspect of the invention, a method of testing a commode in Earth's gravity field at Earth's surface is provided. The method includes generating an airflow into a commode disposed at Earth's surface, positioning, in the airflow, a gas-filled bolus having a neutral buoyancy in Earth's gravity field at Earth's surface and recording movements of the gas-filled bolus in the airflow relative to the commode.

In embodiments, the method further includes forming the gas-filled bolus by inflating inflatable material with gas.

In embodiments, the inflatable material is provided as a balloon and the gas includes helium.

In embodiments, the method further includes coating the gas-filled bolus with a coating to mimic a texture of a fecal deposit.

In embodiments, the method further includes configuring the gas-filled bolus to mimic one or more predefined types of fecal deposits.

In embodiments, the positioning of the gas-filled bolus in the airflow includes injecting the gas-filled bolus into the airflow.

In embodiments, the method further includes varying an injection velocity of the injecting of the gas-filled bolus into the airflow.

In embodiments, the injecting of the gas-filled bolus into the airflow includes injecting the gas-filled bolus from an injection apparatus having a human body geometry.

According to an aspect of the invention, a method of testing a commode in Earth's gravity field at Earth's surface is provided. The method includes forming a gas-filled bolus by inflating inflatable material with gas to have a neutral buoyancy in Earth's gravity field at Earth's surface, generating an airflow into a commode disposed at Earth's surface, injecting the gas-filled bolus into the airflow from an injection apparatus having a human body geometry and recording movements of the gas-filled bolus in the airflow relative to the commode.

In embodiments, the inflatable material is provided as a balloon and the gas includes helium.

In embodiments, the method further includes coating the gas-filled bolus with a coating to mimic a texture of a fecal deposit and configuring the gas-filled bolus to mimic one or more predefined types of fecal deposits.

In embodiments, the method further includes varying an injection velocity of the injecting of the gas-filled bolus into the airflow.

Additional features and advantages are realized through the techniques of the present invention. Other embodiments and aspects of the invention are described in detail herein and are considered a part of the claimed technical concept. For a better understanding of the invention with the advantages and the features, refer to the description and to the drawings.

### BRIEF DESCRIPTION OF THE DRAWINGS

For a more complete understanding of this invention, reference is now made to the following brief description, taken in connection with the accompanying drawings and detailed description, wherein like reference numerals represent like parts:
FIG. 1 is a side schematic view of a commode test system in accordance with embodiments;
FIG. 2 is an illustration of a gas-filled bolus of the commode test system of FIG. 1 in accordance with embodiments;
FIG. 3 is a side schematic view of a commode test system with an injection apparatus in accordance with embodiments; and
FIG. 4 is a flow diagram illustrating a method of testing a commode in Earth's gravity field at Earth's surface.

### DETAILED DESCRIPTION

Human waste collection in space (i.e., in the ISS or a spacecraft) is a necessary part of life support and is made challenging by the fact that the living environments in space are characterized as having a lack of gravity or microgravity. Given the lack of gravity, (hereinafter referred to as "zero G" or "0G") current systems for human waste collection direct waste into a commode using airflow, which is difficult to test with Earth's gravity. Indeed, to complete 0G capture effectiveness tests, systems for human waste collection typically undergo parabolic flight experiments, which can be expensive and which are often unavailable. Development programs need a cheaper and easier way to test waste capture effectiveness in a gravity field on Earth.

As will be described below, a weightless solid waste deposit simulant, or bolus is provided for use during commode testing in a gravity field on Earth to observe capture effectiveness in that gravity field on Earth. The weightless bolus is created by filling a shell with helium, with the shell and the helium having a total mass that allows for their neutral buoyancy to simulate weightlessness. The bolus can optionally be coated with a simulant coating that mimics the texture of a fecal deposit, considering typical textures and simulating the resulting drag forces. The simulant material could be similar to waste simulant used by airlines in commode testing. The bolus shell can be a balloon or an otherwise inflatable material or solid material.

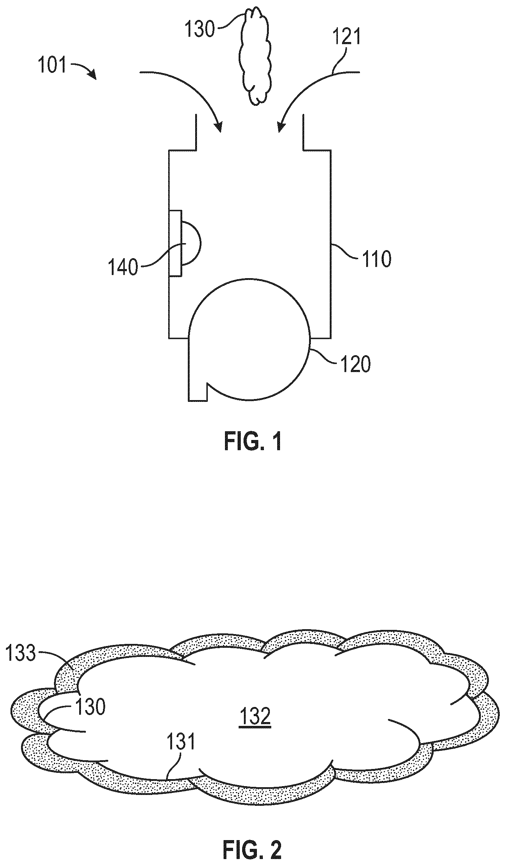

With reference to FIGS. 1 and 2, a commode test system 101 is provided for use in Earth's gravity field at Earth's surface in order to mimic a performance of a human waste collection system in low gravity or microgravity. The commode test system 101 includes a commode 110, which is disposed at Earth's surface, a blower 120 to generate airflow 121 into an interior of the commode 110, a gas-filled bolus 130 having a neutral buoyancy in Earth's gravity field at Earth's surface and recording devices 140 to record movements of the gas-filled bolus 130 in the airflow 121 relative to the commode 110 and the interior of the commode 110.

In accordance with embodiments and as shown in FIG. 2, the gas-filled bolus 130 includes an inflatable material 131 and gas 132 that inflates the inflatable material 131. In accordance with further embodiments and as shown in FIG. 2, the inflatable material 131 can include or be provided as a balloon and the gas 132 can include helium or some other light inert gas. In some cases, the gas-filled bolus 130 can also include a coating 133 that is meant to mimic a texture of a fecal deposit.

In any case, the neutral buoyancy of the gas-filled bolus 130 serves to mimic the movement of a fecal deposit in orbit or a low/micro gravity embodiment though the gas-filled bolus remains on Earth's surface and subject to Earth's gravity at the Earth's surface. This allows for testing of the commode 110 and the effectiveness of the airflow 121 to drive a fecal deposit into the commode 110, which is generated by the blower 120, without a need for expensive and generally unavailable testing scenarios (i.e., a parabolic flight).

The gas-filled bolus 130 can be configured to mimic one or more predefined types of fecal deposits, such as those listed in the Bristol Stool Chart (i.e., see page 3 of https://www.nasa.gov/wp-content/uploads/2023/03/waste-management-technical-brief-ochmo.pdf). That is, the gas-filled bolus 130 can be configured as a separate hard lump, a sausage-shaped and lumpy mass, a sausage-shape and cracked mass, a smooth and soft sausage-shaped mass, a soft blob with clear cut edges, a fluffy piece with ragged edges and a watery mass with no solid pieces. In some cases, the gas-filled bolus 130 can be provided in plural numbers for a single test scenario in which the plural gas-filled boluses 130 are all configured similarly or for a single test scenario in which the plural gas-filled boluses 130 are configured differently.

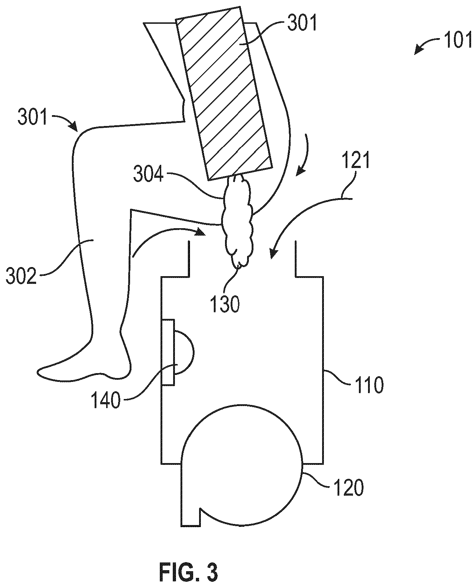

With reference to FIG. 3, the commode test system 101 can further include an injection apparatus 301 that is disposed and configured to inject the gas-filled bolus 130 into the airflow 121. The injection apparatus 301 can include a dispensing element 302 which can provide for a variable injection velocity for injecting the gas-filled bolus 130 into the airflow 121 so as to mimic various conditions in which a fecal deposit is made by various types of individuals. In accordance with embodiments, the injection apparatus 301 can have a human body geometry 303 (i.e., as used herein, a definition for a human body geometry can be found in https://www.nasa.gov/wp-content/uploads/2020/10/2022-04-08_nasa-std-3001_vol_2_rev_c_final.pdf) with an orifice 304 simulating a human sphincter.

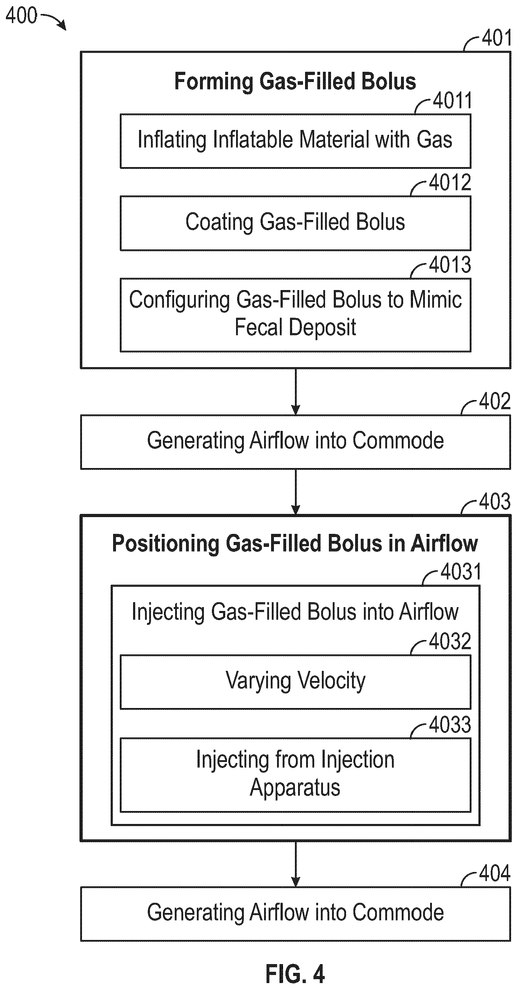

With reference to FIG. 4, a method 400 of testing a commode, such as the commode 110 and the airflow 121 of FIGS. 1-3, in Earth's gravity field at Earth's surface is provided. As shown in FIG. 4, the method 400 includes forming a gas-filled bolus having a neutral buoyancy in Earth's gravity field at Earth's surface (block 401) by inflating inflatable material, such as balloon material, with gas, such as helium (block 4011), by optionally coating the gas-filled bolus with a coating to mimic a texture of a fecal deposit (block 4012) and by optionally configuring the gas-filled bolus to mimic one or more predefined types of fecal deposits (block 4013). The method 400 further includes generating an airflow into a commode disposed at Earth's surface (block 402), positioning the gas-filled bolus in the airflow (block 403) and recording movements of the gas-filled bolus in the airflow relative to the commode (block 404). The positioning of the gas-filled bolus in the airflow of block 403 can include injecting the gas-filled bolus into the airflow (block 4031) while optionally varying an injection velocity (block 4032) and while optionally executing the injecting from an injection apparatus having a human body geometry (block 4033).

Technical effects and benefits of the present invention are the facilitation of the development of space toilet technologies that allow for capture effectiveness testing. Implementing the method and systems disclosed herein in test planning would allow for fast and agile modification of flow settings and geometries of the commode, supporting the required rapid development of the product while increasing confidence in capture effectiveness. This testing will benefit customers and end users by increasing confidence in system performance prior to launch.

The description of the present invention has been presented for purposes of illustration and description, but is not intended to be exhaustive or limited to the technical concepts in the form disclosed. Many modifications and variations will be apparent to those of ordinary skill in the art without departing from the scope of the invention as defined by the claims. The embodiments were chosen and described in order to best explain the principles of the invention and the practical application, and to enable others of ordinary skill in the art to understand the invention for various embodiments with various modifications as are suited to the particular use contemplated.

## Claims

1. A commode test system for use in Earth's gravity field at Earth's surface, the commode test system comprising:
a commode (110) disposed at Earth's surface;
a blower (120) to generate airflow into the commode;
**characterized in that** the system further comprises
a gas-filled bolus (130) having a neutral buoyancy in Earth's gravity field at Earth's surface; and
recording devices (140) to record movements of the gas-filled bolus in the airflow relative to the commode.

2. The commode test system according to claim 1, wherein the gas-filled bolus comprises an inflatable material and gas that inflates the inflatable material.

3. The commode test system according to claim 2, wherein the inflatable material is provided as a balloon and the gas comprises helium.

4. The commode test system according to any preceding claim, wherein the gas-filled bolus further comprises a coating to mimic a texture of a fecal deposit.

5. The commode test system according to any preceding claim, wherein the gas-filled bolus is configured to mimic one or more predefined types of fecal deposits.

6. The commode test system according to any preceding claim, further comprising an injection apparatus (301) to inject the gas-filled bolus into the airflow.

7. The commode test system according to claim 6, wherein the injection apparatus (301) has a variable injection velocity for injecting the gas-filled bolus into the airflow.

8. The commode test system according to claim 6 or 7, wherein the injection apparatus has a human body geometry.

9. A method of testing a commode in Earth's gravity field at Earth's surface, the method comprising:
generating an airflow into a commode (110) disposed at Earth's surface;
positioning, in the airflow, a gas-filled bolus (130) having a neutral buoyancy in Earth's gravity field at Earth's surface; and
recording movements of the gas-filled bolus in the airflow relative to the commode.

10. The method according to claim 9, further comprising forming the gas-filled bolus by inflating inflatable material with gas.

11. The method according to claim 10, wherein the inflatable material is provided as a balloon and the gas comprises helium.

12. The method according to claim 9, 10 or 11, further comprising coating the gas-filled bolus with a coating to mimic a texture of a fecal deposit, and/or further comprising configuring the gas-filled bolus to mimic one or more predefined types of fecal deposits.

13. The method according to any of claims 9 to 12, wherein the positioning of the gas-filled bolus in the airflow comprises injecting the gas-filled bolus into the airflow.

14. The method according to claim 13, further comprising varying an injection velocity of the injecting of the gas-filled bolus into the airflow.

15. The method according to claim 13 or 14, wherein the injecting of the gas-filled bolus into the airflow comprises injecting the gas-filled bolus from an injection apparatus (301) having a human body geometry.

## Patentansprüche

1. Toilettentestsystem zur Verwendung im Schwerefeld der Erde an der Erdoberfläche, wobei das Toilettentestsystem Folgendes umfasst:
eine Toilette (110), die an der Erdoberfläche angeordnet ist;
ein Gebläse (120) zum Erzeugen eines Luftstroms in die Toilette;
**dadurch gekennzeichnet, dass** das System ferner Folgendes umfasst:
einen gasgefüllten Bolus (130), der einen neutralen Auftrieb im Schwerefeld der Erde an der Erdoberfläche aufweist; und
Aufzeichnungsvorrichtungen (140) zum Aufzeichnen von Bewegungen des gasgefüllten Bolus in dem Luftstrom relativ zu der Toilette.

2. Toilettentestsystem nach Anspruch 1, wobei der gasgefüllte Bolus ein aufblasbares Material und Gas, das das aufblasbare Material aufbläst, umfasst.

3. Toilettentestsystem nach Anspruch 2, wobei das aufblasbare Material als ein Ballon bereitgestellt ist und das Gas Helium umfasst.

4. Toilettentestsystem nach einem vorhergehenden Anspruch, wobei der gasgefüllte Bolus ferner eine Beschichtung umfasst, um eine Textur einer Fäkalablagerung nachzuahmen.

5. Toilettentestsystem nach einem vorhergehenden Anspruch, wobei der gasgefüllte Bolus konfiguriert ist, um eine oder mehrere vordefinierte Arten von Fäkalablagerungen nachzuahmen.

6. Toilettentestsystem nach einem vorhergehenden Anspruch, ferner umfassend eine Injektionseinrichtung (301), um den gasgefüllten Bolus in den Luftstrom zu injizieren.

7. Toilettentestsystem nach Anspruch 6, wobei die Injektionseinrichtung (301) eine variable Injektionsgeschwindigkeit zum Injizieren des gasgefüllten Bolus in den Luftstrom aufweist.

8. Toilettentestsystem nach Anspruch 6 oder 7, wobei die Injektionseinrichtung eine menschliche Körpergeometrie aufweist.

9. Verfahren zum Testen einer Toilette im Schwerefeld der Erde an der Erdoberfläche, das Verfahren umfassend:
Erzeugen eines Luftstroms in eine Toilette (110), die an der Erdoberfläche angeordnet ist;
Positionieren, in dem Luftstrom, eines gasgefüllten Bolus (130), der einen neutralen Auftrieb im Schwerefeld der Erde an der Erdoberfläche aufweist; und
Aufzeichnen von Bewegungen des gasgefüllten Bolus in dem Luftstrom relativ zu der Toilette.

10. Verfahren nach Anspruch 9, ferner umfassend Bilden des gasgefüllten Bolus durch Aufblasen von aufblasbarem Material mit Gas.

11. Verfahren nach Anspruch 10, wobei das aufblasbare Material als ein Ballon bereitgestellt ist und das Gas Helium umfasst.

12. Verfahren nach Anspruch 9, 10 oder 11, ferner umfassend Beschichten des gasgefüllten Bolus mit einer Beschichtung, um eine Textur einer Fäkalablagerung nachzuahmen, und/oder ferner umfassend Konfigurieren des gasgefüllten Bolus, um eine oder mehrere vordefinierte Arten von Fäkalablagerungen nachzuahmen.

13. Verfahren nach einem der Ansprüche 9 bis 12, wobei das Positionieren des gasgefüllten Bolus in dem Luftstrom Injizieren des gasgefüllten Bolus in den Luftstrom umfasst.

14. Verfahren nach Anspruch 13, ferner umfassend Variieren einer Injektionsgeschwindigkeit des Injizierens des gasgefüllten Bolus in den Luftstrom.

15. Verfahren nach Anspruch 13 oder 14, wobei das Injizieren des gasgefüllten Bolus in den Luftstrom Injizieren des gasgefüllten Bolus aus einer Injektionseinrichtung (301) umfasst, die eine menschliche Körpergeometrie aufweist.

## Revendications

1. Système d'essai de toilettes destiné à être utilisé dans un champ de gravité terrestre à la surface de la Terre, le système d'essai de toilettes comprenant :
des toilettes (110) disposées à la surface de la Terre ;
une soufflante (120) pour générer un écoulement d'air dans les toilettes ; **caractérisé en ce que** le système comprend en outre un bolus rempli de gaz (130) présentant une flottabilité neutre dans un champ de gravité terrestre à la surface de la Terre ; et
des dispositifs d'enregistrement (140) pour enregistrer des mouvements du bolus rempli de gaz dans l'écoulement d'air par rapport aux toilettes.

2. Système d'essai de toilettes selon la revendication 1, dans lequel le bolus rempli de gaz comprend un matériau gonflable et un gaz qui gonfle le matériau gonflable.

3. Système d'essai de toilettes selon la revendication 2, dans lequel le matériau gonflable est prévu sous forme d'un ballon et le gaz comprend de l'hélium.

4. Système d'essai de toilettes selon l'une quelconque revendication précédente, dans lequel le bolus rempli de gaz comprend en outre un revêtement pour imiter une texture d'un dépôt fécal.

5. Système d'essai de toilettes selon l'une quelconque revendication précédente, dans lequel le bolus rempli de gaz est configuré pour imiter un ou plusieurs types prédéfinis de dépôts fécaux.

6. Système d'essai de toilettes selon l'une quelconque revendication précédente, comprenant en outre un appareil d'injection (301) pour injecter le bolus rempli de gaz dans l'écoulement d'air.

7. Système d'essai de toilettes selon la revendication 6, dans lequel l'appareil d'injection (301) présente une vitesse d'injection variable pour injecter le bolus rempli de gaz dans l'écoulement d'air.

8. Système d'essai de toilettes selon la revendication 6 ou 7, dans lequel l'appareil d'injection présente une géométrie de corps humain.

9. Procédé d'essai de toilettes dans un champ de gravité terrestre à la surface de la Terre, le procédé comprenant :
la génération d'un écoulement d'air dans des toilettes (110) disposées à la surface de la Terre ;
le positionnement, dans l'écoulement d'air, d'un bolus rempli de gaz (130) présentant une flottabilité neutre dans un champ de gravité terrestre à la surface de la Terre ; et
l'enregistrement de mouvements du bolus rempli de gaz dans l'écoulement d'air par rapport aux toilettes.

10. Procédé selon la revendication 9, comprenant en outre la formation du bolus rempli de gaz en gonflant un matériau gonflable avec du gaz.

11. Procédé selon la revendication 10, dans lequel le matériau gonflable est prévu sous forme d'un ballon et le gaz comprend de l'hélium.

12. Procédé selon la revendication 9, 10 ou 11, comprenant en outre le revêtement du bolus rempli de gaz avec un revêtement pour imiter une texture d'un dépôt fécal, et/ou comprenant en outre la configuration du bolus rempli de gaz pour imiter un ou plusieurs types prédéfinis de dépôts fécaux.

13. Procédé selon l'une quelconque des revendications 9 à 12, dans lequel le positionnement du bolus rempli de gaz dans l'écoulement d'air comprend l'injection du bolus rempli de gaz dans l'écoulement d'air.

14. Procédé selon la revendication 13, comprenant en outre la variation d'une vitesse d'injection pour l'injection des bolus rempli de gaz dans l'écoulement d'air.

15. Procédé selon la revendication 13 ou 14, dans lequel l'injection du bolus rempli de gaz dans l'écoulement d'air comprend l'injection du bolus rempli de gaz à partir d'un appareil d'injection (301) présentant une géométrie de corps humain.
